# EUROPÄISCHE PATENTSCHRIFT

(11) **EP 2 349 534 B1**
(45) Veröffentlichungstag und Bekanntmachung des Hinweises auf die Patenterteilung: **19.09.2018**
(21) Anmeldenummer: 09753021.6
(22) Anmeldetag: 15.10.2009
(51) Int. Cl.: B01D 53/14

(54) **WASCHLÖSUNG ZUR GASWÄSCHE MIT AMINEN IN WÄSSRIGER AMMONIAKLÖSUNG SOWIE VERFAHREN**
WASHING SOLUTION FOR GAS SCRUBBING, CONTAINING AMINES IN AN AQUEOUS AMMONIA SOLUTION AND METHOD
SOLUTION DE LAVAGE POUR LE LAVAGE DE GAZ AU MOYEN D'AMINES EN SOLUTION AMMONIACALE AQUEUSE ET PROCEDE

(30) Priorität: 21.10.2008 DE 102008052612
(43) Veröffentlichungstag der Anmeldung: 03.08.2011
(73) Patentinhaber: thyssenkrupp Industrial Solutions AG, 45143 Essen (DE)
(72) Erfinder: MENZEL, Johannes, 45731 Waltrop (DE)
(74) Vertreter: thyssenkrupp Intellectual Property GmbH
(86) Internationale Anmeldenummer: PCT/EP2009/007412
(87) Internationale Veröffentlichungsnummer: WO 2010/046057

(56) Entgegenhaltungen:
- WO-A-2008/090168
- GB-A- 1 309 832
- US-A- 4 278 646
- US-A- 4 462 968
- US-A- 4 863 705
- Rob Lensen: "The promoter effect of piperazine on the removal of carbon dioxide", , 7 January 2004 (2004-01-07), pages 1-28, XP055467452, DOI: 10.1016/j.jcou.2017.08.003 Retrieved from the Internet: URL:http://www.bsdfreaks.nl/files/hoofd6.p df [retrieved on 2018-04-16]

## Beschreibung

Die Erfindung betrifft ein Verfahren zur Absorption von sauren Gasen aus technischen Gasen zu deren Reinigung, wobei man den Gasstrom in einer geeigneten Wäschervorrichtung mit einem flüssigen Absorptionsmittel in Kontakt bringt zur Abscheidung von sauren Gasen aus technischen Gasen und aus Rauchgasen mit wässrigen Ammoniaklösungen unter Zusatz von darin gelösten Aminen. Bevorzugt-zur Abscheidung vorgesehene saure Gase sind Schwefelwasserstoff, Kohlendioxid, Blausäure und oxidische Schwefelverbindungen (SOₓ). Häufig zur Abscheidung anfallende technische Gase, die mit dem erfindungsgemäßen Verfahren gereinigt werden können, sind Koksofengas, Synthesegas, Erdgas, Kohlenmonoxid und Wasserstoff. Die erfindungsgemäße Gaswäsche erfolgt in Vorrichtungen nach dem Stand der. Technik.

Die Entfernung von sauren Gasen aus technischen Nutzgasen ist ein häufig durchgeführter Prozess. Beispiele für Gase, die einem solchem Prozess unterzogen werden, sind Synthesegase und Koksofengase. Für die Weiterverwendung dieser Gase ist es häufig notwendig, die störenden Sauergase daraus zu entfernen. Im industriellen Maßstab werden zur Entfernung von Sauergasen häufig wässrige Lösungen organischer Basen, z. B. Alkanolamine, eingesetzt. Beim Lösen der Sauergase bilden sich dabei aus der Base und den Sauergasbestandteilen ionische Produkte. Das Absorptionsmittel kann durch Erwärmen oder Entspannen auf einen niedrigeren Druck regeneriert werden, wobei die ionischen Produkte zu Sauergasen zurückreagieren und die Sauergase je nach Anforderung mittels Dampf ausgetrieben werden. Nach dem Regenerationsprozess kann das Absorptionsmittel wiederverwendet werden.

Bei der Absorption von Schwefelwasserstoff aus technischen Gasen wird auch ein Teil des häufig in den Gasen ebenfalls enthaltenen Kohlendioxids mitabsorbiert. Der absorbierte Mengenanteil dieses Gases ist jedoch wesentlich geringer als der Mengenanteil des Schwefelwasserstoffs. Grund dafür ist der in der Regel schlechte Stoffübergang des Kohlendioxids in die Waschlösung. Bei der Wäsche der Gase reagiert das Kohlendioxid zu Hydrogencarbonat, welches nach der Reaktion in ionischer Form in der Waschlösung gebunden wird. Die niedrige Reaktionsgeschwindigkeit des Kohlendioxids in die ionische Form bedingt den im Vergleich zum Schwefelwasserstoff verringerten Mengenanteil an Kohlendioxid.

Bei der Durchführung von Sauergaswäschen ist jedoch häufig erwünscht, den Mengenanteil des absorbierten Kohlendioxids deutlich zu steigern. Dadurch erspart man einen erheblichen apparativen Aufwand ein. Auf diese Weise gelingt es, einen erheblich größeren Anteil an Sauergasen in einem Prozessschritt aus technischen Gasen auszuwaschen.

Die DE 102004011429 A1 beschreibt ein Verfahren zur Absorption von Sauergasen. Beschrieben wird ein Verfahren zum Entfernen von Kohlendioxid aus einem Gasstrom, in dem der Partialdruck des Kohlendioxids sehr gering ist, wobei man den Gasstrom mit einem flüssigen Absorptionsmittel in Kontakt bringt, das eine wässrige Lösung einer Aminverbindung mit wenigstens zwei tertiären Aminogruppen im Molekül umfasst und einen Aktivator, der unter primären und sekundären Aminen ausgewählt Ist Bei der Durchführung von Absorptionsreaktionen besteht jedoch weiterhin ein Bedarf, die absorbierte Menge an Sauergasen und insbesondere an Kohlendioxid bezogen auf die Menge des eingesetzten Lösungsmittels, weiter zu steigern.

Die GB 1464439 A beschreibt ein Verfahren zur Entfernung von sauren Gaskomponenten aus Industriegasen und insbesondere aus einem Koksofengas, einem Synthesegas, oder Erdgas. Die sauren Gase werden durch eine Alkanolaminlösung absorbiert, die im Kreis geführt wird, so dass das Lösungsmittel das saure Gas absorbiert und im Folgeschritt des Kreisprozesses desorbiert, beispielsweise durch Erhitzen. Die Lehre beschreibt eine Zersetzung des absorbierenden Lösungsmittels durch die Bildung thermisch stabiler Thlocyanate. Zur Stabilisierung werden dem Lösungsmittel deshalb Ammoniak oder Ammoniumsalze zugesetzt. Diese reagieren mit den gebildeten Thiocyanaten unter Rückbildung der Gaskomponenten. Eine Zugabe von Ammoniak zu einer aminhaltigen Lösung mit dem Ziel der Verbesserung der Absorptionsfähigkeit von sauren Gasen, insbesondere von CO₂, wird nicht beschrieben.

Die US 4,278,646 beschreibt ein Verfahren zur Entfernung von Schwefelwasserstoff aus einem Gasstrom. Der im Gaststrom enthaltene Schwefelwasserstoff wird durch in einer sauren Waschlösung enthaltene Eisen(III)-Komplexe zu elementarem Schwefel oxidiert, welcher dann durch Filtration oder Zentrifugation aus der Waschlösung entfernt werden kann. Die Verwendung einer sauren Waschlösung verhindert zum Einen die Bildung von unerwünschten Schwefeloxiden und fuhrt zum Anderen dazu dass kein Kohlendioxid von der Lösung absorbiert wird.

Rob Lensen beschreibt in "The promoter effect of piperazine on the removal of carbon dioxide" (2004-01-07), Seiten 1-28, (DOI: 10.1016/j.jcou.2017.08.003 http://www.bsdfreaks.nl/ files/hoofd6.pdf) eine CO2 Wäsche mit MDEA bzw. Alkanolaminen und Piperazin als Promoter.

Das eingesetzte Lösungsmittel soll möglichst stabil, insbesondere auch stabil gegen Sauerstoff sein und nicht zuletzt auch möglichst kostengünstig sein. Bedingt durch die Zersetzung der Amine durch eine Reaktion mit dem In den Rauchgasen enthaltenem Sauerstoff oder mit den in dem Rauchgas enthaltenen Schwefeloxiden oder Stickoxiden kommt es zu Lösungsmittelverlusten. Viele aminbasierte Waschmittel besitzen hohe Beschaffungskosten, weshalb Lösungsmittelverluste während des Betriebes zu erhöhten laufenden Kosten des Verfahrens beitragen. Auch soll das eingesetzte Lösungsmittel eine möglichst geringe Zahl an für den Stoffaustausch notwendigen Vorrichtungsteilen, insbesondere In der Waschkolonne, aufweisen.

Es besteht deshalb die Aufgabe, ein verbessertes Lösungsmittel oder eine verbesserte Lösungsmittelkombination zur Verfügung zu stellen, die eine erheblich höhere Menge an Sauergasen in technischen Gasen absorbiert. Häufig zur Reinigung anfallende technische Gase, die mit dem erfindungsgemäßen Verfahren gereinigt werden können, sind Koksofengas, Synthesegas, Erdgas, niedere Alkane und Alkene und Wasserstoff. Das verbesserte Lösungsmittel soll ein möglichst preiswertes sein und unter den angewendeten Bedingungen stabil sein. Die in der Lösungsmittelkombination enthaltenen Bestandteile, sollen sauerstoffstabil, sein, um eine genügend große. Lebensdauer in der Gaswäschervorrichtung zu gewährleisten. Die erfindungsgemäße Lösungsmlttelkombination sollte außerdem einen deutlich verbesserten Stoffübergang für das zu entfernende Kohlendioxid aufweisen. Der Nachfüllbedarf für die kostenträchtige Aminkomponente soll niedrig und die Zahl der zum Stoffaustausch benötigten Vorrichtungen soll gering sein.

Die Erfindung löst diese Aufgabe durch ein Verfahren zur Absorption von sauren Gasen aus technischen Gasen zu deren Reinigung, wobei man den Gasstrom in einer geeigneten Wäschervorrichtung mit einem flüssigen Absorptionsmittel in Kontakt bringt, aus einem Amin und wässriger Ammoniaklösung. Das eingesetzte Amin ist dabei insbesondere ein primäres Amin oder ein sekundäres Amin. Besonders geeignet als Aminkomponente ist Piperazin. Mit diesem Aminzusatz ergibt sich eine deutlich bessere Kohlendioxidabsorption auch bei atmosphärischen Druckbedingungen, wodurch sich eine solche Wäsche insbesondere für die Entfernung von Kohlendioxid aus Rauchgasen eignet. Mit Ammoniak als Hauptkomponente für de Bindung des Kohlendioxids lässt sich der Stoffübergang für dieses Gas wesentlich verbessern und die Kosten für das laufende Verfahren können erheblich gesenkt werden.

Als Aminzusätze eigenen sich nicht nur einfache primäre Amine, sondern auch sekundäre oder cyclische Amine. Für einige Fälle können auch tertiäre Amine geeignet sein. Die Aminkomponente in Gaswaschlösungen wird im allgemeinen Sprachgebrauch auch als Aktivator bezeichnet. Besonders bevorzugt als Aktivatorkomponente ist Piperazin. Es ist jedoch auch möglich, Alkylamine, Dialkylamine, oder Diarylamine zu verwenden. Das im Lösungsmittel vorgesehene Ammoniak ermöglicht eine gegenüber reinen Aminlösungen höhere Aufnahmekapazität für Kohlendioxid, so dass die Kohlendioxidentfernung mit niedrigeren Kreislaufmengenströmen und somit mit entsprechend geringerem Regenerationsenergiebedarf durchgeführt werden kann. Auch die benötigte Menge an Austauschlösungsmittel und die Zahl der zum Lösungsmittelaustausch notwendigen Vorrichtungsteile ist erheblich geringer.

Beansprucht wird insbesondere ein Verfahren zur Absorption von sauren Gasen aus technischen Gasen zu deren Reinigung, wobei man den Gasstrom in einer geeigneten Wäschervorrichtung mit einem flüssigen Absorptionsmittel in Kontakt bringt, wobei das flüssige Absorptionsmittel eine wässrige Lösung darstellt, die Ammoniak und wenigstens ein Amin enthält, und das Amin keine Hydroxyalkylsubstituenten im Molekül enthält. Beansprucht wird auch die Verwendung eines solchen flüssigen Absorptionsmittels als Waschlösung in einem Gaswäscheprozess zur Absorption von sauren Gasen und insbesondere Kohlendioxid aus technischen Gasen.

Bei dem Amin kann es sich um ein primäres oder um ein sekundäres Amin handeln. Für einige Fälle können auch tertiäre Amine geeignet sein. Die Substituenten an dem Amin können beliebig geartet sein. Das primäre Amin kann die allgemeine Formel H₂N-R^{a} aufweisen, worin R^{a} unter Alkylgruppen, Arylgruppen, oder Arylalkylgruppen ausgewählt ist. Beispiele für geeignete primäre Amine sind n-Propylamin, *iso*-Propylamin oder Phenylamin. Der Siedepunkt des primären Amins sollte bevorzugt über Raumtemperatur liegen, um den Gaswäscheprozess technisch einfach zu gestalten.

Auch das sekundäre Amin kann beliebig geartet sein. Die Substituenten der sekundären Aminverbindung können beliebig geartet sein. Das Amin kann beispielhaft die allgemeine Formel R^{a}-N(H)-R^{b} aufweisen, worin R^{a} und R^{b} unabhängig voneinander unter Alkylgruppen, Arylgruppen, oder Arylalkylgruppen ausgewählt sind. Beispiele für geeignete sekundäre Amine sind Diethylamin, Di-n-propylamin oder Diphenylamin. Der Siedepunkt des primären Amins sollte ebenfalls bevorzugt über Raumtemperatur liegen, um den Gaswäscheprozess technisch einfach zu gestalten.

Für einige Zwecke können auch bifunktionelle Amine für die Gaswäsche besonders geeignet sein. Beispiele für solche Amine sind Amine mit der Strukturformel R^{a}R^{b}-N-X-N-R^{a'}R^{b'}, worin R^{a}, R^{b}, R^{a'} und R^{b'} unabhängig voneinander unter Alkylgruppen, Arylgruppen, oder Arylalkylgruppen ausgewählt sind und X für Alkylen- oder Arylengruppen steht.

Besonders geeignet sind Aminverbindungen, die unter einem 5- oder 6-gliedrigen Heterocyclus ausgewählt sind und eine NH-Gruppe im Ring besitzen. Bevorzugte Heterocyclen sind Piperazin oder Piperazinderivate. Beispiele für geeignete Piperazinderivate sind 2-Methylpiperazin, N-Methylpiperazin, Piperidin oder Morpholin. Letztlich sind aber alle Piperazinderivate, die wasserlöslich und genügend preiswert sind, als Aminverbindungen für die Extraktion geeignet. Durch die Anwesenheit der Amine steigt die Absorptionsgeschwindigkeit und damit die Absorptionsfähigkeit für Kohlendioxid in der wässrigen Ammoniaklösungen für eine gegebene Stoffübertragungshöhe deutlich an.

Als Prozesse zur Erzeugung von technischen Gasen, die mit dem erfindungsgemäßen Verfahren gereinigt werden können, handelt es sich beispielhaft um Kohlevergasungen, um Dampfreformierprozesse, um Kokereigaserzeugungen, um Raffineriegasreinigungen oder um Naturgasgewinnungsverfahren. Es kann sich jedoch prinzipiell um beliebige Prozesse handeln, wenn diese aufgrund ihrer Natur Sauergas und insbesondere Kohlendioxid enthalten. Besonders geeignet ist diese Lösungsmittelkombination für die Entfernung von CO₂ aus Rauchgasen. Geeignet zur Anwendung der erfindungsgemäßen Lösungsmittelkombination ist insbesondere auch ein Koksofengas. Bei den abzuscheidenden Sauergasen handelt es sich insbesondere um Schwefelwasserstoff, Kohlendioxid, Blausäure, Mercaptane, Kohlenstoffoxidsulfid (COS), oxidische Schwefelverbindungen (SOₓ) oder ein Gemisch dieser Gase. In dem erzeugten Gas können sich auch Stickoxide befinden. Die erfindungsgemäße Lösungsmittelkombination ist unempfindlich gegenüber Stickoxiden und Sauerstoff und besitzt lange Standzeiten.

Das Amin sollte für die Anwendung in der Absorptionslösung eine Konzentration von 0,001 bis 50 Massenprozent besitzen. Besonders geeignet sind Konzentrationen von 0,1 bis 20 Massenprozent. Die Ammoniaklösung sollte für die Anwendung eine Konzentration von 0,1 bis 32 Massenprozent besitzen. Besonders geeignet sind Ammoniakkonzentrationen von 10 bis 25 Massenprozent. Die Konzentration der Lösungsmittelbestandteile hängt von der Anwendungstemperatur und vom Anwendungsdruck ab.

Die wässrige Ammoniaklösung wird dem Amin direkt zugesetzt, wodurch eine zur Absorption geeignete Lösung entsteht. Je nach pH-Wert kann das Ammoniak auch in Form eines Ammoniumsalzes zugegeben werden. Ein geeignetes Ammoniumsalz ist beispielhaft Ammoniumcarbonat.

Für die Durchführung des Gaswäscheprozesses sind alle Vorrichtungen geeignet, die sich zur Durchführung einer Gaswäsche eignen. Zur Durchführung des erfindungsgemäßen Verfahrens geeignete Vorrichtungen umfassen wenigstens eine Gaswaschkolonne. Als Gaswaschkolonnen kommen beispielhaft Füllkörper, Packungs- und Bodenkolonnen und weitere Absorber wie Membrankontaktoren, Radialstromwäscher, Strahlwäscher oder Venturi-Wäscher in Frage. Hinzu kommen alle Vorrichtungen, die geeignet sind, um die Regeneration der Waschlösung durch das Austreiben des in, der Waschlösung befindlichen Kohlendioxids durchzuführen. Hierzu zählen, beispielhaft Vorwärmer, "Flash"-Behälter, Abtriebskolonnen, Verdampfer, Kondensatoren, oder Reabsorber.

Die Durchführung des Verfahrens wird bei Bedingungen ausgeführt, die üblicherweise bei Gaswäscheprozessen angewendet werden. Bevorzugte Prozessbedingungen für die CO₂-Entfernung aus Rauchgasen sind Temperaturen von 20 °C bis 100 °C und Drücke von 0,5 bar bis 100 bar. Bevorzugte Prozessbedingungen für die Regenerierung der Waschlösung sind Temperaturen von 80 °C bis 200 °C und Drücke von 0,1 bar bis 20 bar. Je nach Anforderung können die angewendeten Temperaturen auch niedriger liegen oder die angewendeten Drücke höher.

Die Erfindung besitzt den Vorteil eines Verfahrens mit einem hohen Absorptionsvermögen für saure Gase und insbesondere für Kohlendioxid. Die erfindungsgemäße Lösungsmittelkombination ist preiswert und einfach einzusetzen. Durch das erhöhte Absorptionsvermögen für Kohlendioxid lässt sich die Menge an absorbiertem Sauergas deutlich anheben und die Menge an Lösungsmittelumlauf deutlich reduzieren. Durch die Unempfindlichkeit gegenüber Sauerstoff und Stickoxiden besitzt die erfindungsgemäße Lösungsmittelkombination eine hohe Standzeit in Gaswaschprozessen, so dass der Austauschbedarf für frisches Lösungsmittel niedrig und die benötigte Zahl für Lösungsmittelregenerationsvorrichtungen gering ist.

## Patentansprüche

1. Waschlösung zur Entfernung von sauren Gaskomponenten aus technischen Nutzgasen, wobei man den Gasstrom in einer geeigneten Wäschervorrichtung mit einem flüssigen Absorptionsmittel in Kontakt bringt, **dadurch gekennzeichnet, dass**
(i) das flüssige Absorptionsmittel aus einer wässrigen Ammoniaklösung und wenigstens einem Amin besteht, und
(ii) das Amin keine Hydroxyalkylsubstituenten im Molekül enthält,
wobei die Lösung eine Aminkonzentration von 0,1 bis 20 Massenprozent und eine Ammoniakkonzentration von 10 bis 25 Massenprozent besitzt.

2. Waschlösung nach Anspruch 1, **dadurch gekennzeichnet, dass** es sich bei dem Amin um ein primäres oder sekundäres Amin handelt.

3. Waschlösung zur Entfernung von sauren Gaskomponenten nach Anspruch 2, **dadurch gekennzeichnet, dass** die primäre Aminverbindung die allgemeine Formel
H₂N-R^{a}
aufweist, worin R^{a} unter Alkylgruppen, Arylgruppen, oder Arylalkylgruppen ausgewählt ist.

4. Waschlösung zur Entfernung von sauren Gaskomponenten nach Anspruch 2, **dadurch gekennzeichnet, dass** die sekundäre Aminverbindung die allgemeine Formel
R^{a}-N(H)-R^{b}
aufweist, worin R^{a} und R^{b} unabhängig voneinander unter Alkylgruppen, Arylgruppen, oder Arylalkylgruppen ausgewählt sind.

5. Waschlösung nach Anspruch 4, **dadurch gekennzeichnet, dass** die sekundäre Aminverbindung unter Diethylamin, Dipropylamin oder Diphenylamin ausgewählt ist.

6. Waschlösung Entfernung von sauren Gaskomponenten nach Anspruch 2, **dadurch gekennzeichnet, dass** die Aminverbindung die allgemeine Formel
R^{a}R^{b}-N-X-N-R^{a}R^{b'}
aufweist, worin R^{a}, R^{b}, R^{a} und R^{b1} unabhängig voneinander unter Alkylgruppen, Arylgruppen, oder Arylalkylgruppen ausgewählt sind und X für eine Alkylen- oder Arylalkylengruppe steht.

7. Waschlösung nach einem der Ansprüche 1 bis 6, **dadurch gekennzeichnet, dass** die Aminverbindung unter einem 5- oder 6-gliedrigen gesättigten Heterocyclus mit wenigstens einer NH-Gruppe im Ring ausgewählt ist.

8. Waschlösung nach Anspruch 7, **dadurch gekennzeichnet, dass** die Aminverbindung unter Piperazin oder einem Piperazinderivat ausgewählt ist.

9. Verfahren zur Absorption von sauren Gasen aus technischen Gasen zu deren Reinigung **dadurch gekennzeichnet, dass** man die technischen Gase mit einer Waschlösung mit einem flüssigen Absorptionsmittel behandelt, wobei das flüssige Absorptionsmittel aus einer wässrigen Ammoniaklösung und wenigstens einem Amin besteht, und das Amin keine Hydroxyalkylsubstituenten im Molekül enthält, wobei die Lösung eine Aminkonzentration von 0,001 bis 50 Massenprozent und eine Ammoniakkonzentration von 1 bis 32 Massenprozent besitzt.

10. Verfahren nach Anspruch 9, **dadurch gekennzeichnet, dass** man eine Waschlösung nach einem der Ansprüche 1-8 einsetzt.

11. Verfahren nach einem der Ansprüche 9 oder 10, **dadurch gekennzeichnet, dass** man Synthesegas, Erdgas, niedere Alkane und Alkene, Kohlenmonoxid oder Wasserstoff oder ein Gemisch dieser Gase reinigt.

12. Verfahren nach einem der Ansprüche 9 oder 10, **dadurch gekennzeichnet, dass** man Rauchgas reinigt.

13. Verfahren nach einem der Ansprüche 9 oder 10, **dadurch gekennzeichnet, dass** man Koksofengas reinigt.

14. Verfahren nach einem der Ansprüche 9 oder 10, **dadurch gekennzeichnet, dass** man Schwefelwasserstoff, Kohlendioxid, Blausäure, Mercaptane, Kohlenstoffoxidsulfid oder oxidische Schwefelverbindungen oder ein Gemisch dieser Gase abtrennt.

15. Verfahren nach einem der Ansprüche 9 bis 14, **dadurch gekennzeichnet, dass** man die Waschlösung bei der Absorption bei einer Anwendungstemperatur von 20°C bis 100 °C und einen Anwendungsdruck von 0,5 bar bis 100 bar einsetzt.

16. Verfahren nach einem der Ansprüche 9 bis 14, **dadurch gekennzeichnet, dass** man die Waschlösung bei der Absorption bei einer Anwendungstemperatur von 80°C bis 200 °C und einen Anwendungsdruck von 0,1 bar bis 20 bar einsetzt.

17. Verwendung einer Waschlösung nach Anspruch 1 zur Entfernung von Schwefelwasserstoff, Kohlendioxid, Blausäure, Mercaptanen, Kohlenstoffoxidsulfid oder oxidischen Schwefelverbindungen oder deren Gemischen aus Rauchgas oder Koksofengas.

## Claims

1. Scrubbing solution for removal of acidic gas components from industrial gases, wherein the gas stream is contacted with a liquid absorption medium in a suitable scrubbing apparatus, **characterized in that**
(i) the liquid absorption medium consists of an aqueous ammonia solution and at least one amine and
(ii) the amine contains no hydroxyalkyl substituents in the molecule,
wherein the solution has an amine concentration of 0.1 to 20 mass percent and an ammonia concentration of 10 to 25 mass percent.

2. Scrubbing solution according to Claim 1, **characterized in that** the amine is a primary or secondary amine.

3. Scrubbing solution for removal of acidic gas components according to Claim 2, **characterized in that** the primary amine compound has the general formula
H₂N-R^{a},
wherein R^{a} is selected from alkyl groups, aryl groups or arylalkyl groups

4. Scrubbing solution for removal of acidic gas components according to Claim 2, **characterized in that** the secondary amine compound has the general formula
R^{a}-N(H)-R^{b},
wherein R^{a} and R^{b} are independently of one another selected from alkyl groups, aryl groups or arylalkyl groups.

5. Scrubbing solution according to Claim 4, **characterized in that** the secondary amine compound is selected from diethylamine, dipropylamine or diphenylamine.

6. Scrubbing solution for removal of acidic gas components according to Claim 2, **characterized in that** the amine compound has the general formula
R^{a}R^{b}-N-X-N-R^{a}R^{b'},
wherein R^{a}, R^{b}, R^{a} and R^{b'} are independently of one another selected from alkyl groups, aryl groups or arylalkyl groups and X represents an alkylene or arylakylene group.

7. Scrubbing solution according to any of Claims 1 to 6, **characterized in that** the amine compound is selected from a 5-membered or 6-membered saturated heterocycle having at least one NH group in the ring.

8. Scrubbing solution according to Claim 7, **characterized in that** the amine compound is selected from piperazine or a piperazine derivative.

9. Process for absorption of acidic gases from industrial gases for the purification thereof, **characterized in that** the industrial gases are treated with a scrubbing solution comprising a liquid absorption medium, wherein the liquid absorption medium consists of an aqueous ammonia solution and at least one amine and the amine contains no hydroxyalkyl substituents in the molecule, wherein the solution has an amine concentration of 0.001 to 50 mass percent and an ammonia concentration of 1 to 32 mass percent.

10. Process according to Claim 9, **characterized in that** a scrubbing solution according to any of Claims 1-8 is employed.

11. Process according to Claim 9 or 10, **characterized in that** synthesis gas, natural gas, lower alkanes and alkenes, carbon monoxide or hydrogen or a mixture of these gases is purified.

12. Process according to to either of Claims 9 or 10, **characterized in that** flue gas is purified.

13. Process according to either of Claims 9 or 10, **characterized in that** coke oven gas is purified.

14. Process according to either of Claims 9 or 10, **characterized in that** hydrogen sulfide, carbon dioxide, prussic acid, mercaptans, carbon oxide sulfide or oxidic sulfur compounds or a mixture of these gases is removed.

15. Process according to any of Claims 9 to 14, **characterized in that** the scrubbing solution is employed in the absorption at a use temperature of 20°C to 100°C and a use pressure of 0.5 bar to 100 bar.

16. Process according to any of Claims 9 to 14, **characterized in that** the scrubbing solution is employed in the absorption at a use temperature of 80°C to 200°C and a use pressure of 0.1 bar to 20 bar.

17. Use of a scrubbing solution according to Claim 1 for removal of hydrogen sulfide, carbon dioxide, prussic acid, mercaptans, carbon oxide sulfide or oxidic sulfur compounds or mixtures thereof from flue gas or coke oven gas.

## Revendications

1. Solution de lavage pour l'élimination de composants gazeux acides de gaz utiles techniques, le courant gazeux étant mis en contact dans un dispositif d'épuration approprié avec un agent d'absorption liquide, **caractérisée en ce que**
(i) l'agent d'absorption liquide est constitué par une solution aqueuse d'ammoniac et au moins une amine, et
(ii) l'amine ne contient pas de substituant hydroxyalkyle dans la molécule,
la solution présentant une concentration d'amine de 0,1 à 20 pour cent en masse et une concentration d'ammoniac de 10 à 25 pour cent en masse.

2. Solution de lavage selon la revendication 1, **caractérisée en ce que** l'amine est une amine primaire ou secondaire.

3. Solution de lavage pour l'élimination de composants gazeux acides selon la revendication 2, **caractérisée en ce que** le composé d'amine primaire présente la formule générale
H₂N-R^{a}
dans laquelle R^{a} est choisi parmi les groupes alkyle, les groupes aryle ou les groupes arylalkyle.

4. Solution de lavage pour l'élimination de composants gazeux acides selon la revendication 2, **caractérisée en ce que** le composé d'amine secondaire présente la formule générale
R^{a}-N(H)-R^{b}
dans laquelle R^{a} et R^{b} sont choisis indépendamment l'un de l'autre parmi les groupes alkyle, les groupes aryle ou les groupes arylalkyle.

5. Solution de lavage selon la revendication 4, **caractérisée en ce que** le composé d'amine secondaire est choisi parmi la diéthylamine, la dipropylamine ou la diphénylamine.

6. Solution de lavage pour l'élimination de composants gazeux acides selon la revendication 2, **caractérisée en ce que** le composé d'amine présente la formule générale
R^{a}R^{b}-N-X-N-R^{a}R^{b'}
dans laquelle R^{a}, R^{b}, R^{a} et R^{b'} sont choisis indépendamment les uns des autres parmi les groupes alkyle, les groupes aryle ou les groupes arylalkyle, et X représente un groupe alkylène ou arylalkylène.

7. Solution de lavage selon l'une quelconque des revendications 1 à 6, **caractérisée en ce que** le composé d'amine est choisi parmi un hétérocycle saturé à 5 ou 6 chaînons contenant au moins un groupe NH dans le cycle.

8. Solution de lavage selon la revendication 7, **caractérisée en ce que** le composé d'amine est choisi parmi la pipérazine ou un dérivé de pipérazine.

9. Procédé d'absorption de gaz acides à partir de gaz techniques pour leur purification, **caractérisé en ce que** les gaz techniques sont traités avec une solution de lavage comprenant un agent d'absorption liquide, l'agent d'absorption liquide étant constitué par une solution aqueuse d'ammoniac et au moins une amine, et l'amine ne contenant pas de substituant hydroxyalkyle dans la molécule, la solution présentant une concentration d'amine de 0,001 à 50 pour cent en masse et une concentration d'ammoniac de 1 à 32 pour cent en masse.

10. Procédé selon la revendication 9, **caractérisé en ce qu'**une solution de lavage selon l'une quelconque des revendications 1 à 8 est utilisée.

11. Procédé selon l'une quelconque des revendications 9 ou 10, **caractérisé en ce qu'**un gaz de synthèse, un gaz naturel, des alcanes et alcènes inférieurs, du monoxyde de carbone ou de l'hydrogène ou un mélange de ces gaz sont purifiés.

12. Procédé selon l'une quelconque des revendications 9 ou 10, **caractérisé en ce qu'**un gaz de combustion est purifié.

13. Procédé selon l'une quelconque des revendications 9 ou 10, **caractérisé en ce qu'**un gaz de four de cokéfaction est purifié.

14. Procédé selon l'une quelconque des revendications 9 ou 10, **caractérisé en ce que** du sulfure d'hydrogène, du dioxyde de carbone, de l'acide cyanhydrique, des mercaptans, de l'oxysulfure de carbone ou des composés de soufre oxydiques ou un mélange de ces gaz sont séparés.

15. Procédé selon l'une quelconque des revendications 9 à 14, **caractérisé en ce que** la solution de lavage est utilisée lors de l'absorption à une température d'utilisation de 20 °C à 100 °C et à une pression d'utilisation de 0,5 bar à 100 bar.

16. Procédé selon l'une quelconque des revendications 9 à 14, **caractérisé en ce que** la solution de lavage est utilisée lors de l'absorption à une température d'utilisation de 80 °C à 200 °C et à une pression d'utilisation de 0,1 bar à 20 bar.

17. Utilisation d'une solution de lavage selon la revendication 1 pour l'élimination de sulfure d'hydrogène, de dioxyde de carbone, d'acide cyanhydrique, de mercaptans, d'oxysulfure de carbone ou de composés de soufre oxydiques ou leurs mélanges d'un gaz de combustion ou d'un gaz de four de cokéfaction.
